# EUROPEAN PATENT APPLICATION

(11) **EP 4 718 893 A1**
(43) Date of publication of application: **01.04.2026**
(21) Application number: 24306572.9
(22) Date of filing: 26.09.2024
(51) Int. Cl.: H04W 8/00

(54) **UWB COMMUNICATION DEVICE AND OPERATING METHOD**

(71) Applicant: NXP B.V., 5656 AG Eindhoven (NL)
(72) Inventor: Ridolfi, Matteo, 31023 Toulouse (FR); Martinez, Vincent Pierre, 31023 Toulouse (FR)
(74) Representative: Krott, Michel

(57) **Abstract**

In accordance with a first aspect of the present disclosure, an ultra-wideband (UWB) communication device is provided, comprising: a transmitting unit configured to initiate a device detection session by transmitting a pre-discovery message and to transmit, during said device detection session, at least one discovery message in order to discover one or more external devices; a receiving unit configured to receive, during said device detection session, one or more responses to the discovery message, wherein said responses have been transmitted by said external devices. In accordance with a second aspect of the present disclosure, a corresponding method of operating a UWB communication device is conceived.

## Description

### TECHNICAL FIELD

The present disclosure relates to an ultra-wideband (UWB) communication device. Furthermore, the present disclosure relates to a corresponding method of operating a UWB communication device.

### BACKGROUND

Cyclists, as well as pedestrians, are among the most vulnerable road users (VRUs). The lack of visibility, or low visibility, of VRUs may create hazardous situations in traffic.

### SUMMARY

In accordance with a first aspect of the present disclosure, an ultra-wideband (UWB) communication device is provided, comprising: a transmitting unit configured to initiate a device detection session by transmitting a pre-discovery message and to transmit, during said device detection session, at least one discovery message in order to discover one or more external devices; a receiving unit configured to receive, during said device detection session, one or more responses to the discovery message, wherein said responses have been transmitted by said external devices.

In one or more embodiments, the pre-discovery message contains information indicative of a duration of the device detection session, in order to reserve a communication channel for subsequent UWB transmissions pertaining to the device detection session.

In one or more embodiments, said information indicative of the duration of the device detection session is contained in a physical layer header (PHR) field of the pre-discovery message.

In one or more embodiments, the pre-discovery message has a physical layer service data unit (PSDU) field having a predefined, fixed length.

In one or more embodiments, the UWB communication device further comprises: a selection unit configured to select, based on the responses received by the receiving unit, at least one of said external devices for carrying out one or more localization operations during said device detection session; a localization unit configured to perform said localization operations using the transmitting unit and the receiving unit.

In one or more embodiments, the UWB communication device further comprises a user interface configured to enable a user to activate the UWB communication device.

In one or more embodiments, the transmitting unit is configured to transmit the pre-discovery message using a listen-before-talk (LBT) type of channel access mechanism.

In one or more embodiments, the localization operations comprise UWB-based ranging operations and/or UWB-based radar operations.

In one or more embodiments, the UWB communication device further comprises a warning unit configured to warn a user and/or to transmit a warning message to the external devices.

In one or more embodiments, a road safety system comprises a UWB communication device of the kind set forth and said external devices.

In accordance with a second aspect of the present disclosure, a method of operating a UWB communication device is conceived, comprising: initiating, by a transmitting unit included in the UWB communication device, a device detection session by transmitting a pre-discovery message and transmitting, during said device detection session, at least one discovery message in order to discover one or more external devices; receiving, by a receiving unit included in the UWB communication device, during said device detection session, one or more responses to the discovery message, wherein said responses have been transmitted by said external devices.

In one or more embodiments, the pre-discovery message contains information indicative of a duration of the device detection session, in order to reserve a communication channel for subsequent UWB transmissions pertaining to the device detection session.

In one or more embodiments, said information indicative of the duration of the device detection session is contained in a PHR field of the pre-discovery message.

In one or more embodiments, the pre-discovery message has a PSDU field having a fixed length.

In one or more embodiments, the method further comprises: selecting, by a selection unit included in the UWB communication device, based on the responses received by the receiving unit, at least one of said external devices for carrying out one or more localization operations during said device detection session; performing, by a localization unit included in the UWB communication device, said localization operations using the transmitting unit and the receiving unit.

### DESCRIPTION OF DRAWINGS

Embodiments will be described in more detail with reference to the appended drawings.
Fig. 1 shows an illustrative embodiment of a UWB communication device.
Fig. 2 shows an illustrative embodiment of a method of operating a UWB communication device.
Fig. 3 shows an illustrative embodiment of a method of operating a UWB communication device.
Fig. 4A shows an example of an intelligent transport system (ITS) system architecture.
Fig. 4B shows an illustrative embodiment of an integration of VRU signaling and detection into the ITS system architecture.
Fig. 5 shows an illustrative embodiment of a communication flow.
Fig. 6 shows an illustrative embodiment of a pre-discovery message.
Fig. 7 shows an illustrative embodiment of a discovery message.
Fig. 8 shows an illustrative embodiment of a nearby message.
Fig. 9 shows an illustrative embodiment of a communication flow of a VRU.
Fig. 10 shows an illustrative embodiment of a communication flow of road users.
Fig. 11 shows an illustrative embodiment of a communication session.
Fig. 12 shows another illustrative embodiment of a communication session.

### DESCRIPTION OF EMBODIMENTS

As mentioned above, cyclists, as well as pedestrians, are among the most VRUs. In particular, large vehicles such as trucks and buses struggle to clearly assess if there is such a VRU in their proximity. Although blind spots may be monitored using technologies such as radar, such technologies are typically passive systems which rely on their detection accuracy and responsiveness. In case of a fast, relatively small user (such as a pedestrian or a cyclist), this detection accuracy and responsiveness cannot always be guaranteed, especially in crowded urban environments. Moreover, these systems are typically expensive and/or difficult to integrate as aftermarket devices or to include in consumer electronic devices. Alternative technologies, which may include camera-based systems, are often expensive and might raise privacy concerns.

Similarly, in urban crossing scenarios VRUs may suddenly appear and remain unnoticed by other road users, such that hazardous situations may arise. Furthermore, in many traffic scenarios there may be no line-of-sight, in the sense that one or more obstacles may be blocking a direct view on a VRU. For example, a large truck or a bus may form an obstacle that blocks the direct view from an approaching vehicle towards the VRU. Clearly, such a lack of line-of-sight may also create hazardous situations in traffic.

Now discussed are a UWB communication device, as well as a corresponding method of operating a UWB communication device, which facilitate increasing the safety of vulnerable road users, in a reliable and cost-effective manner. The UWB communication device may for example be a portable device which is carried by a vulnerable road user, a wearable device, or a device which is integrated into or attached to a vehicle which is used by the road user, such as a bicycle. The UWB communication device may be included in a road safety system.

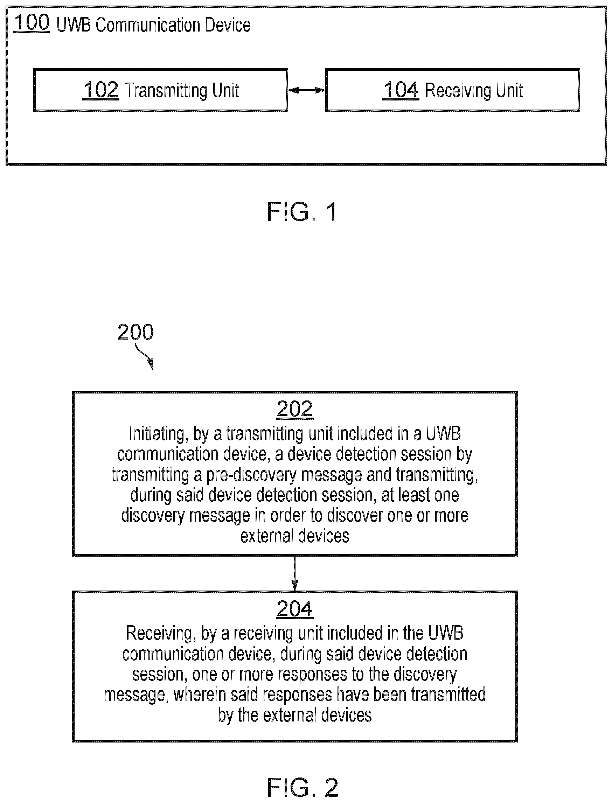

Fig. 1 shows an illustrative embodiment of a UWB communication device 100. The UWB communication device 100 comprises a transmitting unit 102 and a receiving unit 104 which are operatively coupled to each other. The transmitting unit 102 is configured to initiate a device detection session by transmitting a pre-discovery message and to transmit, during said device detection session, at least one discovery message in order to discover one or more external devices (not shown). Furthermore, the receiving unit 104 is configured to receive, during said device detection session, one or more responses to the discovery message, wherein said responses have been transmitted by the external devices.

In this way, the safety of vulnerable road users may be increased in a reliable and cost-effective manner. In particular, the UWB communication device 100 may easily initiate a device detection session during which it discovers, as a first step, whether external devices participating in the ITS network (e.g., devices carried by other road users or mounted in or attached to vehicles used by such road users) are present within its communication range. It is noted that the term "discovery message" refers to a message that is transmitted in order to discover whether external devices are present in the vicinity of the UWB communication device 100. Furthermore, it is noted that the term "pre-discovery message" refers to a message that precedes the transmission of a discovery message. Furthermore, it is noted that, although the transmitting unit 102 and receiving unit 104 have been shown as separate units, they may be integrated into a single physical component of the UWB communication device 100. Furthermore, these units may be implemented as hardware, software, or a combination thereof. Furthermore, the term "device detection session" refers to a UWB communication session during which external devices are being detected. An integral part of the detection of said devices is the discovery of said devices within the vicinity of the UWB communication device. As described below, one or more localization operations may form an optional part of the device detection session (i.e., an optional second step in addition to the discovery), in order to obtain information about the position of the external devices relative to the position of the UWB communication device. Finally, it is noted that the term "road user" may be interpreted broadly, in the sense that it may refer to any kind of user who is capable of using the road itself or, for example, a sidewalk or a cycle path adjacent to said road.

In one or more embodiments, the pre-discovery message contains information indicative of a duration of the device detection session, in order to reserve a communication channel for subsequent UWB transmissions pertaining to the device detection session. In this way, the communication channel may easily be reserved for the entire duration of the device detection session, such that the likelihood that said session is interrupted by other devices attempting to access the channel is reduced. In one or more embodiments, said information indicative of the duration of the device detection session is contained in a PHR field of the pre-discovery message. By encoding the device detection session duration in the PHR field of the pre-discovery message, the entire detection session may be interpreted as a single UWB communication packet by other, non-ITS UWB devices potentially also transmitting in the same frequency channel, such that the channel is effectively reserved for all subsequent UWB transmissions pertaining to the device detection session. Furthermore, in one or more embodiments, the pre-discovery message has a PSDU field having a predefined, fixed length, which is known by the devices participating in the ITS network (e.g., fixed by a protocol). In this way, the length of the PSDU field, which is typically encoded in the PHR field, no longer needs to be encoded therein, such that the latter can easily be reused for specifying the duration of the device detection session.

In one or more embodiments, the UWB communication device further comprises: a selection unit configured to select, based on the responses received by the receiving unit, at least one of said external devices for carrying out one or more localization operations during said device detection session, and a localization unit configured to perform said localization operations using the transmitting unit and the receiving unit. In this way, localization operations may be carried out to determine the position of these external devices relative to the UWB communication device. The result of these localization operations represents a suitable measure of the risk to which a vulnerable road user who uses the UWB communication device is exposed. Thus, in this way, a suitable measure of said risk may be obtained, representing information which is complementary to the collected responses to the discovery message.

In one or more embodiments, the UWB communication further comprises a user interface configured to enable a user to activate the UWB communication device. In this way, the user may be able to actively trigger the UWB communication device to perform the safety-increasing functions of the kind set forth above, i.e. discovering external devices in the proximity and optionally performing localization operations to determine the relative position of said devices. Furthermore, in one or more embodiments, the transmitting unit is configured to transmit the pre-discovery message using a listen-before-talk (LBT) type of channel access mechanism, such as the CSMA/CA protocol used for Wi-Fi IEEE 802.11 communication. In this way, packet collisions are mitigated and fairness in access to the channel is ensured.

In one or more embodiments, the localization operations comprise UWB-based ranging operations and/or UWB-based radar operations. These operations facilitate determining the relative position of the external devices with an acceptable accuracy and reliability. In particular, the localization unit may perform said UWB-based ranging operations and/or UWB-based radar operations through the transmitting unit and the receiving unit. In case of ranging operations, the localization unit may trigger the transmitting unit to transmit UWB messages which are received by an external device, and to receive responses to the transmitted UWB messages through the receiving unit. In case of radar operations, the localization unit may trigger the transmitting unit to transmit UWB signals which are reflected by an external device or an object (e.g., a vehicle) in which the external device is integrated or to which it is attached. In that case, the localization unit may receive the reflected UWB signals through the receiving unit.

In one or more embodiments, the UWB communication device further comprises a warning unit configured to warn a user and/or to transmit a warning message to the external devices. In this way, the user of the UWB communication device or the users of the external devices may easily be warned about a potentially dangerous situation.

Fig. 2 shows an illustrative embodiment of a method 200 of operating a UWB communication device. The method 200 comprises the following steps. At 202, a transmitting unit included in the UWB communication device initiates a device detection session by transmitting a pre-discovery message and transmits, during said device detection session, at least one discovery message in order to discover one or more external devices. Furthermore, at 204, a receiving unit included in the UWB communication device receives, during said device detection session, one or more responses to the discovery message, wherein said responses have been transmitted by the external devices. In this way, the safety of vulnerable road users may be increased in a reliable and cost-effective manner. In particular, the external devices which are discovered are located within communication range and participate in the ITS network (e.g., vehicles located in the proximity of the UWB communicating device).

In accordance with the present disclosure, a system for VRU protection and a method to operate such a system may be implemented, which are based on multiple UWB operating methods, i.e., beaconing, ranging and radar. In particular, the discovery message may be implemented as a beacon. The system may be used by any UWB device, such as a sensor mounted on a bicycle or carried by a pedestrian (e.g., a smart phone), as well as by other road users. The VRUs may be responsible for the system activation. As a first step, short packets (i.e., beacons) may be broadcasted, which may be collected by the other road users (e.g., vehicles, in particular by UWB anchors used for smart car access applications). The other road users respond to a beacon to acknowledge their presence. Subsequently, dedicated ranging and radar sessions may optionally be used to improve and accurately determine the relative position of the road users relative to the VRU. If the system concludes that the VRU is close to other road users, then it may trigger a warning sign for the VRU and/or for the other road users, to pay extra attention or to take a specific action such as stopping the vehicle or perform another maneuver.

Accordingly, VRUs may actively signal their presence to other road users. In other words, instead of passively being detected by other road users, the VRUs may actively trigger their detection by sending a discovery message. For this purpose, UWB technology may be used. The VRUs may for example activate the system by pressing a button on their smart phone, or on the handle of their bike. A dedicated UWB message (i.e., the discovery message) may then be broadcasted and picked up by all the other UWB-enabled road users. Thus, multiple UWB operating modes may be exploited, such as beaconing, ranging and radar to accurately protect VRUs and inform other road users about their presence, position and direction of arrival. Furthermore, a fair access to the UWB communication channel may be implemented, as described in more detail below.

UWB communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e. for determining the distance between communicating devices. In addition, UWB technology may be used for radar operations. Therefore, UWB technology may be used to advantage in various applications, such as automotive applications.

More specifically, UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. In addition to ranging operations of this kind, UWB devices may also carry out radar operations. Thus, UWB devices may operate in a ranging mode, as well as in a radar mode.

In a ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). It is noted that an angle-of-arrival (AoA) mode of operation is similar to a ranging mode, but it involves at least two antennas on one device. In particular, in an AoA mode of operation, two phase values associated with at least two CIRs are calculated on one device. Then, a phase difference of arrival (PDoA) is calculated based on the two phase values, and an AoA is calculated based on the PDoA. An AoA mode of operation may facilitate a more accurate determination of the position of an object, and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation. Furthermore, as used herein, the ranging mode may include performing operations based on a so-called Time Difference of Arrival (TDoA) technique, instead of a ToF technique. The TDoA technique is particularly suitable for real-time localization operations. Generally speaking, the term "ranging mode" covers all types localization operations based on UWB message exchanges with an external UWB communication device. It is noted that AoA calculations may be used in combination with both ToF calculations and TDoA calculations.

In a radar mode of operation, frames are transmitted by at least one device and those frames are received by the same device and/or by one or more other devices. Then, the CIRs are estimated on the device or devices receiving the frames, and the range and/or velocity and/or AoA are calculated based on the estimated CIRs. Thus, AoA calculations may also be performed in the radar mode of operation. A radar mode of operation may be used to advantage to detect (i.e., sense) the presence of objects or human beings. However, a radar mode of operation may also be used to estimate a distance, although with a lower accuracy than the ranging mode of operation will typically achieve. The skilled person will appreciate that the given examples are non-limiting examples of how the different modes of operation can be implemented. In other words, the modes may be implemented differently, depending on the requirements imposed by the application, for example.

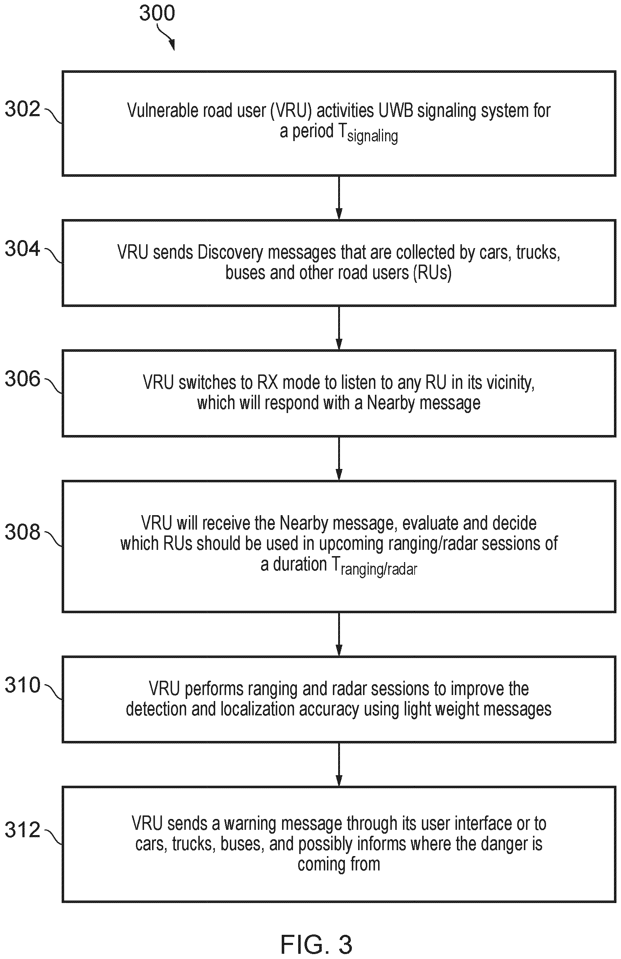

Fig. 3 shows an illustrative embodiment of a method 300 of operating a UWB communication device. In particular, a more detailed, non-limiting example of an implementation of the presently disclosed method is shown. The method 300 comprises the following steps. At 302, a vulnerable road user (VRU) activates a UWB signaling system for a period T_{signaling}. At 304, the VRU sends discovery messages that are collected by cars, trucks, buses and other road users (RUs). At 306, the VRU switches to RX mode to listen to any RU in its vicinity, which will respond with a so-called "nearby" message (i.e., a response to a discovery message). At 308, the VRU will receive the nearby message, evaluate it and decide which RUs should be used in upcoming ranging/radar sessions of a duration T_{ranging/radar}. Then, at 310, the VRU performs ranging and radar sessions to improve the detection and localization accuracy using light weight messages. Finally, at 312, the VRU sends a warning message through its user interface or to cars, trucks, buses, and possibly informs where the danger is coming from.

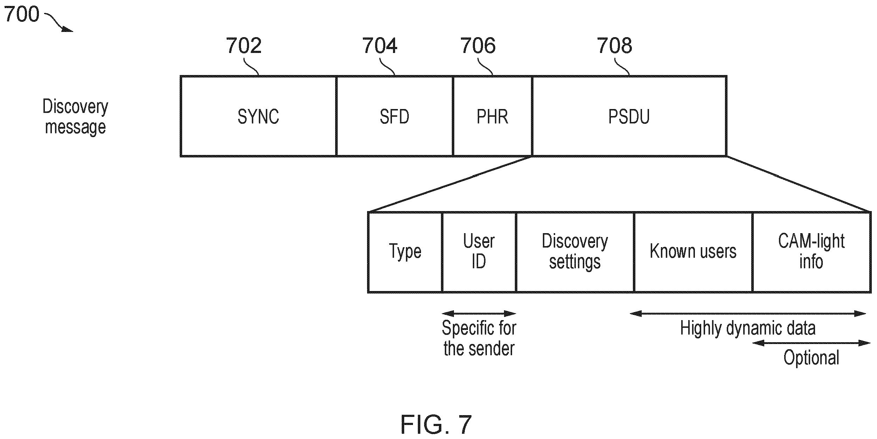

In particular, the method 300 may improve the road safety of VRUs, by enabling them to signal their presence to other road users (RUs) such as cars and trucks, using UWB. This is important in situations of limited visibility, for example due to the size of the vehicles or due to atmospheric conditions. The VRUs are responsible for the activation of the system, which is similar to a driver who indicates his intention to turn by using the indicator. This has the benefits of keeping the VRUs attention high and of minimizing detection errors and false or unwanted triggers. Once active, the system enters the signaling phase and starts broadcasting short UWB messages (i.e., discovery messages), which have the goal of reaching as many RUs as possible. These messages may follow a specific packet structure, as described with reference to Fig. 7, and have a high quality of service (QoS) to ensure a high packet reception rate. Once the broadcast is finished, the VRU switches to a listening mode, ready to receive any acknowledgement (i.e., responses to the discovery messages) from the surrounding RUs. These cycles are meant for the VRUs to obtain a complete picture of all surrounding road users and can last n times or for a specific duration.

After the signaling phase, the VRU initiates the ranging and/or radar phase: it indicates which RUs participate, and then the VRU's UWB communication device and the external devices associated with the RUs start exchanging one or several messages intended to obtain their relative position towards each other. If VRUs are detected and classified as "in danger", an alarm or warning may be sent to the RUs. This may be implemented in different forms, such as light, sound and/or vibration. On the other hand, the VRUs may also be triggered if one or more RUs seem to continue with their maneuver.

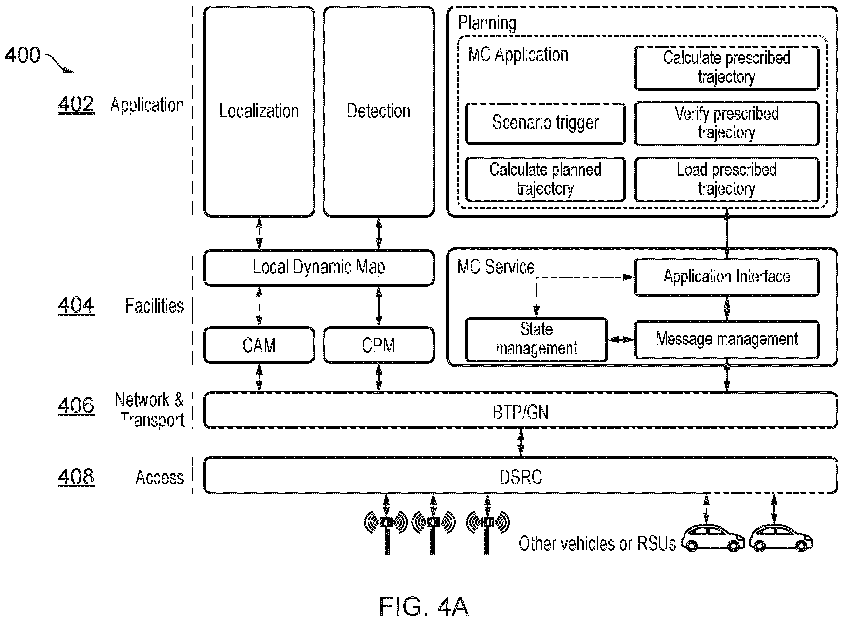

**Fig. 4A** shows an example of an intelligent transport system (ITS) system architecture 400. In particular, a typical ITS system architecture 400 is shown, as described in the paper "AutoMCM: Maneuver Coordination Service with Abstracted Functions for Autonomous Driving", written by Masaya Mizutani et al. and published at the IEEE Intelligent Transportation Systems Conference (ITSC) in Indianapolis, USA. September 19-21, 2021 (DOI: 10.1109/ITSC48978.2021.9564556). The system architecture comprises an application layer 402, a facilities layer 404, a network and transport layer 406, and an access layer 408, each of which comprising specific components and functions of an ITS system. For example, the application layer 402 and facilities layer 404 implement functions relating to localization, detection and maneuver coordination (MC).

A so-called cooperative intelligent transport system (C-ITS) uses vehicle-to-everything (V2X) technology to make self-driving vehicles safer and more efficient. C-ITS defines network architectures and messaging for V2X. For example, a cooperative awareness message (CAM) may be used by a vehicle to provide real-time information about its status, and a collective perception message (CPM) may be used to share real-time information about the vehicle's surroundings. The use of these messages are functions that are typically implemented in the facilities layer 404. Furthermore, the network and transport layer 406 comprises functions relating to the so-called basic transport protocol (BTP) and geo-networking (GN). Finally, the access layer 408 comprises functions relating to dedicated short-range communications (DSRC).

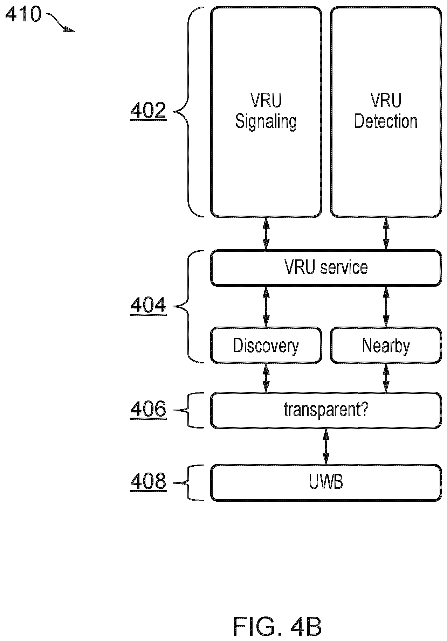

**Fig. 4B** shows an illustrative embodiment of an integration 410 of VRU signaling and detection into the ITS system architecture shown in Fig. 4A. In particular, UWB technology is used as a complementary access layer 408 in the typical ITS stack. Because of its properties and application domains, it enables specific services, in particular related to VRU protection. The high-level VRU signaling and detection functions may be implemented in the application layer 402, while the discovery message and nearby message processing functions may be implemented in the facilities layer 404. The skilled person will appreciate that the network and transport layer 406 may be transparent in the sense that any suitable network and transport protocol could be used, although it might require some changes to adapt to the UWB access layer 408.

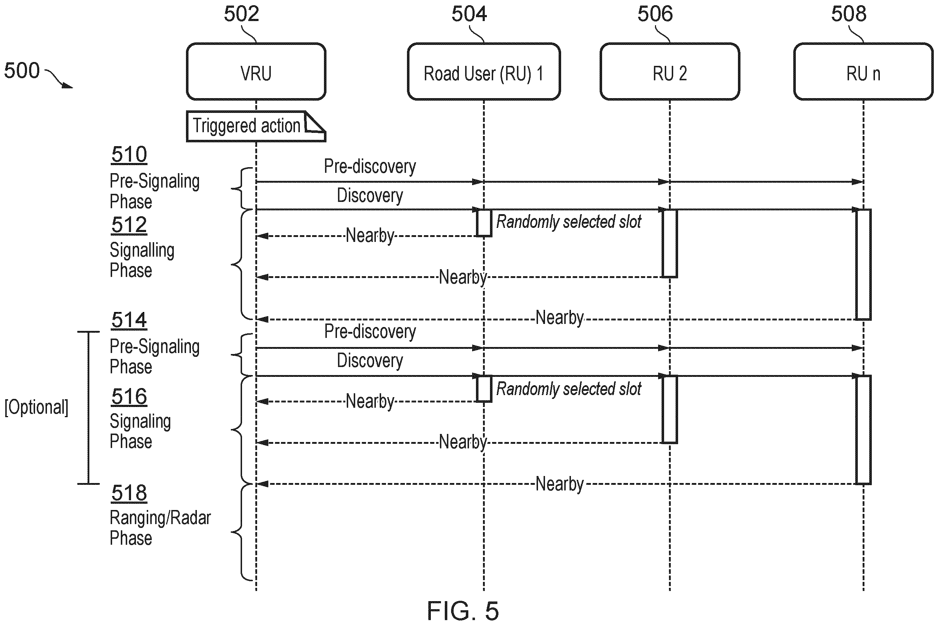

Fig. 5 shows an illustrative embodiment of a communication flow 500. In particular, a non-limiting example is shown of a communication between a VRU 502 and multiple other RUs 504, 506, 508, in accordance with the present disclosure. It is assumed that the VRU 502 carries or includes a UWB communication device of the kind set forth, and that the other RUs 504, 506, 508 also carry or include UWB-enabled devices which are "external" to the UWB communication device of the VRU 502. The communication flow 500 comprises at least one pre-signaling phase 510, 514 and signaling phase 512, 516 followed by a ranging/radar phase 518.

The signaling is triggered by the VRU 502. Upon this trigger, the VRU 502 enters the pre-signaling phase (T_{pre-signaling}) by sending the pre-discovery message (e.g., beacon). This is meant to alert the surrounding road users of an imminent signaling procedure and to thereby avoid UWB packets collisions. Subsequently, the VRU 502 initiates the actual signaling phase (T_{signaling}), which is composed of the VRU broadcast of the discovery message (e.g., beacon) and a transmission of the response to said discovery message (i.e., the nearby message) by the RUs 504, 506, 508 (i.e., a unicast back to the VRU 502). To keep track of highly dynamic environments and therefore rapidly changing users, the sequence of pre-signaling and signaling phases can be repeated multiple consecutive times (e.g., twice in the example shown in Fig. 5). After the signaling phase, the VRU 502 identifies the closest RUs 504, 506, 508 and starts with a ranging and/or radar phase, to determine the position of said closest RUs 504, 506, 508 relative to the VRU 502 (more specifically, the position of the external devices associated with said closest RUs 504, 506, 508 relative to the position of the UWB communication device associated with the VRU 502).

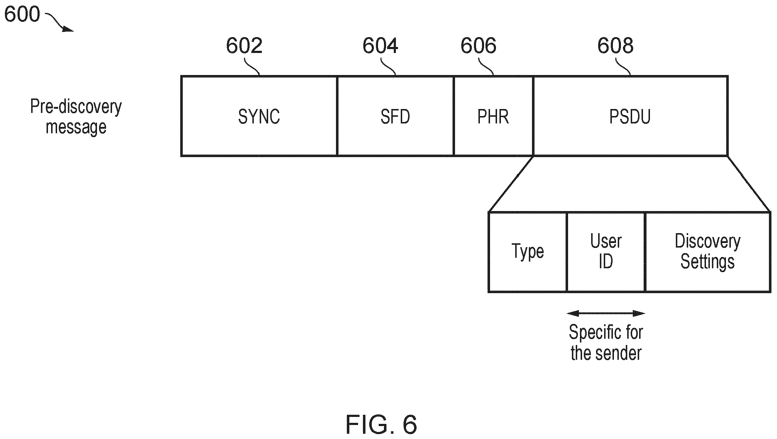

**Fig. 6** shows an illustrative embodiment of a pre-discovery message 600. The pre-discovery message 600 contains a SYNC field 602, a start of frame delimiter (SFD) field 604, a physical layer header (PHR) field 606, and a physical layer service data unit (PSDU) field 608. These fields are defined in the *IEEE Standard for Low-Rate Wireless Networks,* as laid down in the IEEE 802.15.4, 802.15.4a and 802.15.4z technical specification documents. The pre-discovery message 600 is defined in such a way that the communication is kept lightweight for better responsiveness, that fair access to the channel is established and that regulations such as low duty cycle (LDC) are complied with. The PSDU field 608 contains the payload contents of the pre-discovery message 600. In particular, the PSDU field 608 contains the type of the message (i.e., data indicative of the fact that the message is a pre-discovery message), a user identifier (i.e., a unique ID identifying the VRU), and so-called discovery settings (i.e., information on the upcoming device detection session, such as the update rate and/or signaling phase duration and time slot division). In one or more embodiments, the duration and/or modulation of the pre-discovery message PSDU is not indicated by the pre-discovery message PHR. Such information may be defined by the protocol. The information conveyed by the PHR of the pre-discovery message is intended to inform about the duration of the device detection session.

**Fig. 7** shows an illustrative embodiment of a discovery message 700. The discovery message 700 contains a SYNC field 702, an SFD field 704, a PHR field 706, and a PSDU field 708, again in accordance with the above-mentioned *IEEE Standard for Low-Rate Wireless Networks.* The discovery message 700 is defined in such a way that the communication is kept lightweight for better responsiveness, that fair access to the channel is established and that regulations such as LDC are complied with. The PSDU field 708 contains the payload contents of the discovery message 700. In particular, the PSDU field 708 contains the type of the message (i.e., data indicative of the fact that the message is a discovery message), a user identifier (i.e., a unique ID identifying the VRU), optional discovery settings (i.e., information on the pending device detection session, such as the update rate and/or signaling phase duration and time slot division), a list of already known users (e.g., containing for each user an RU ID, timestamps, and relative distance if already available), and a lightweight version of CAM information (e.g., coordinates, speed, heading, a discovery message transmission timestamp and a nearby message reception timestamp).

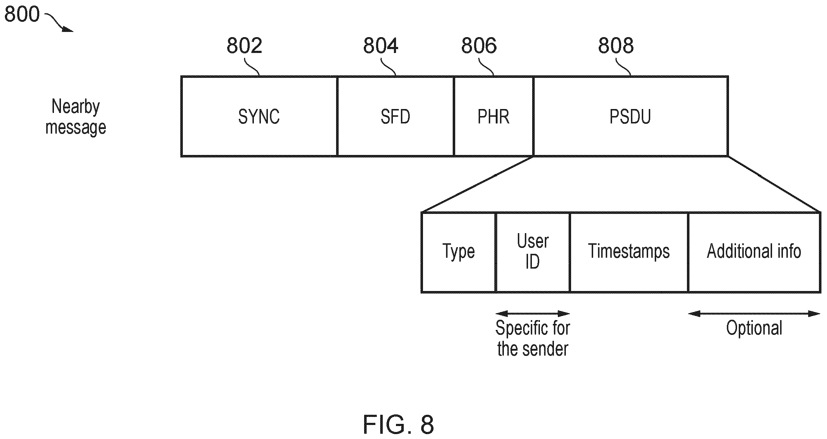

**Fig. 8** shows an illustrative embodiment of a nearby message 800. The nearby message 800 contains a SYNC field 802, an SFD field 804, a PHR field 806, and a PSDU field 808, again in accordance with the above-mentioned IEEE 802.15.4z standard. The nearby message 800 is defined in such a way that the communication is kept lightweight for better responsiveness, that fair access to the channel is established and that regulations such as LDC are complied with. The PSDU field 808 contains the payload contents of the nearby message 800. In particular, the PSDU field 808 contains the type of the message (i.e., data indicative of the fact that the message is a nearby message), a user identifier (i.e., a unique ID identifying the RU), timestamps (i.e., a discovery message reception timestamp and a nearby message transmission timestamp), and additional information (e.g., a CFO, optional additional details such as global coordinates and direction which are to be used by the application layer).

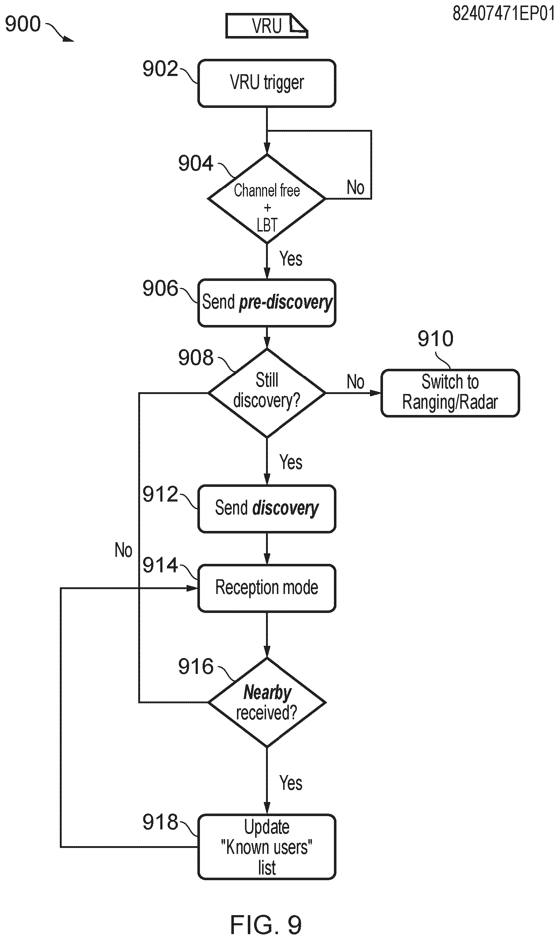

**Fig. 9** shows an illustrative embodiment of a communication flow 900 of a VRU. Upon a trigger 902 from the VRU, the system enters the pre-signaling phase and attempts to transmit 906 the pre-discovery message. An example of how this message could be transmitted is using an LBT channel access mechanism 904 (e.g., CSMA/CA) with the aim to avoid collisions with other ongoing ITS messages or other sessions which are also active in the channel. At this point, the VRU enters the signaling phase, which is time-scheduled in contrast to the pre-signaling phase. The VRU broadcasts 912 the discovery message after which it switches to reception mode 914, for *n* time slots (as many as defined in the pre-discovery message). If the VRU receives 916 a nearby message, it updates 918 its list of already known users depending on whether the ID is already known. If not known yet, it will be added to the list of known users during the next signaling phase, i.e., in the subsequent discovery message.

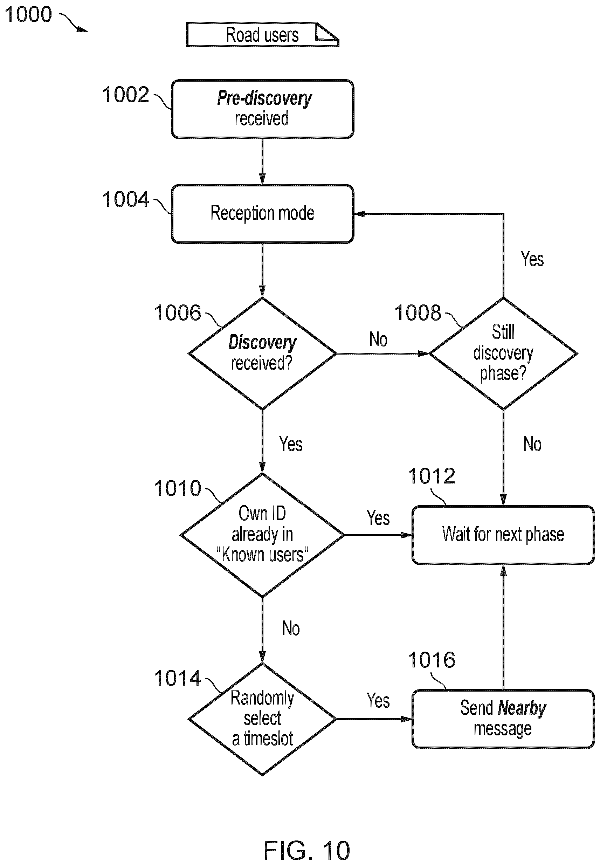

**Fig. 10** shows an illustrative embodiment of a communication flow 1000 of road users. In particular, the RU receiving 1002 a pre-discovery message will know that a signaling phase is about to start and obtains information about it, for example its duration and the time division in slots (i.e., number of slots, lengths). It therefore enters reception mode 1004 and when it receives 1006 a discovery message, it first decodes the payload and verifies 1010 if its own ID is already present in the known users field. If so, it will not transmit a nearby message and will go back to the reception mode 1004. On the other hand, if its ID is not yet included in the discovery message, it will send 1016 a nearby message in a randomly selected 1014 time slot, based on the information received 1002 in the pre-discovery message.

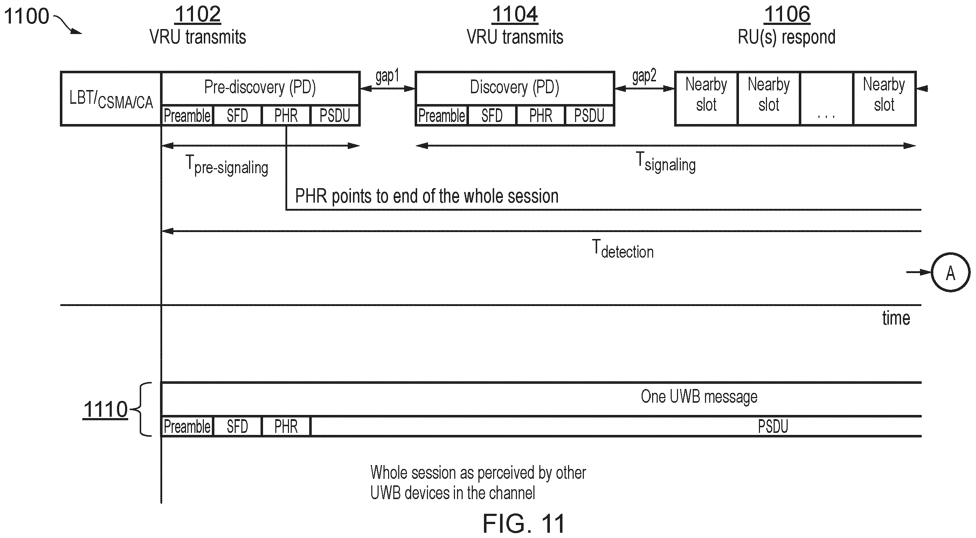

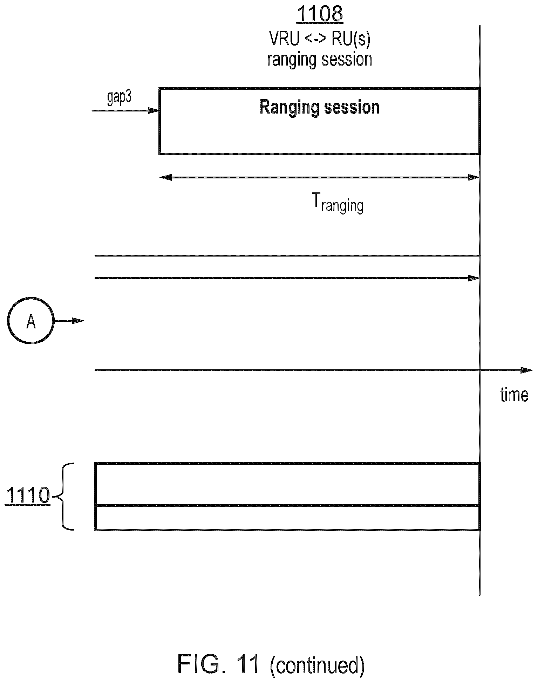

**Fig. 11** shows an illustrative embodiment of a device detection session 1100. The device detection session 1100 is based on a VRU signaling and detection scheme that relies on short packet transmissions with a minimal set of information. Furthermore, the session 1100 comprises different sub-sessions, corresponding to the above-described phases. T_{detection} is the duration of a device detection session, which is composed of: the pre-signaling phase T_{pre-signaling}, the signaling phase with a duration of T_{signaling}, and the ranging and/or radar phase with a duration of T_{ranging/radar}. The PHR of the pre-discovery (PD) message indicates the total device detection session time (T_{detection}) to "reserve" the channel for the entire duration of the device detection session, including the pre-signaling phase, the signaling phase, and the ranging and/or radar phase. In this way, other LBT-based UWB transmissions originating from other UWB devices (for example devices not participating in the ITS network) will be deferred to a later time, thereby not colliding with the device detection session (and thus not occupying the empty slots provisioned for the RUs responding to the VRU discovery message). To achieve this, the PD PSDU should have a predefined, fixed size so that the receiving RU devices do not extract the PD PSDU size information from the PD PHR, but instead use a predefined PSDU duration. The signaling phase comprises the transmission of a discovery (D) message (i.e., a discovery short broadcast packet) and *N* nearby message slots. In addition, Gap1 between PD and D is envisaged, similar to time gaps applied in for example Wi-Fi applications (e.g., a short interframe space, SIFS, of 16 µs). Gap2 and Gap3 may be larger than Gap1, so that the receiver can prepare their next packets (e.g., Gap 2 and Gap 3 may be 32 µs). It is noted that the pre-signaling and signaling phases can be repeated *M* times before the ranging/radar phase starts.

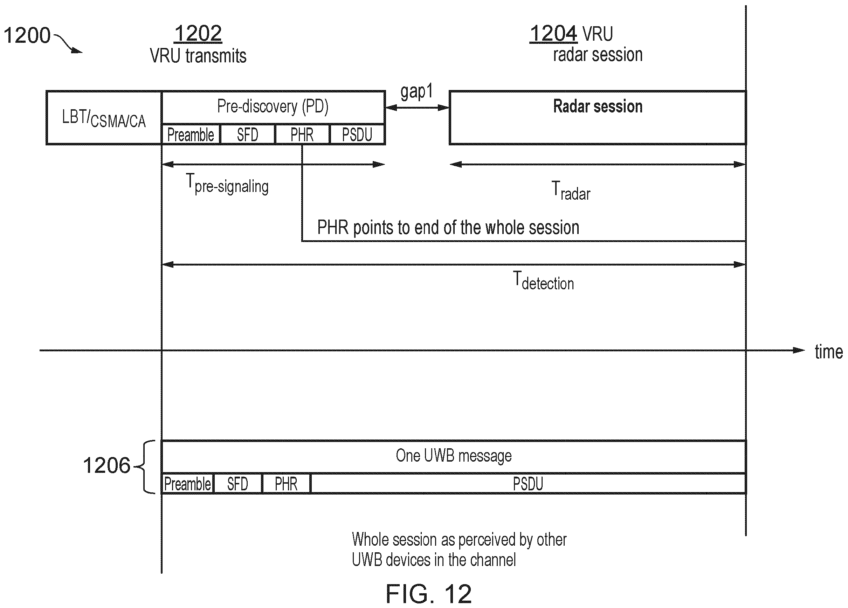

**Fig. 12** shows another illustrative embodiment of a communication session 1200. In particular, it is shown how a VRU may use a pre-discovery message (PD) with the purpose of reserving the communication channel for its own UWB radar detection session, in order to detect surrounding objects in a way similar to automotive short-range radar applications operating at 77 GHz, for example. More specifically, in that case the VRU may decide to broadcast a PD to make sure that other UWB CSMA/CA-enabled devices will not transmit before its session is finished, and then switch to a radar session, wherein UWB is used in radar mode for short range detection (e.g., to detect if there is an obstacle in front of a bicycle).

The presently disclosed UWB communication device and corresponding operating method may be applied in different scenarios and applications. For example, a UWB communication device of the kind set forth may communicate with external UWB-enabled devices installed in a vehicle. These external UWB-enabled devices may be UWB nodes which have already been installed in the vehicle for other purposes, e.g. for smart access applications. Furthermore, the external devices may also be devices which are retrofitted and attached to mirrors and backlights of a truck. Furthermore, the UWB communication device itself may be mounted on a bicycle and integrated with the light system, for example. In that case, the system could be activated by the cyclist by pushing a button on the handlebar. Alternatively, the UWB communication device may be integrated into a smart phone, through which the signaling system can be activated. It is noted that many cyclists are already using their phone to navigate. Thus, the phone may also be used to implement the presently disclosed VRU protection application, which has the advantage that no additional hardware needs to be purchased and mounted on the bicycle. Finally, the UWB communication device may also be integrated into other personal devices, such as headphones and smart tags.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: UWB communication device
- 102: transmitting unit
- 104: receiving unit
- 200: method of operating a UWB communication device
- 202: initiating, by a transmitting unit included in the UWB communication device, a device detection session by transmitting a pre-discovery message and transmitting, during said device detection session, at least one discovery message in order to discover one or more external devices
- 204: receiving, by a receiving unit included in the UWB communication device, during said device detection session, one or more responses to the discovery message, wherein said responses have been transmitted by the external devices
- 300: method of operating a UWB communication device
- 302: vulnerable road user (VRU) activates UWB signaling system for a period T_{signaling}
- 304: VRU sends discovery messages that are collected by cars, trucks, buses and other road users (RUs)
- 306: VRU switches to RX mode to listen to any RU in its vicinity, which will respond with a nearby message
- 308: VRU will receive the Nearby message, evaluate and decide which RUs should be used in upcoming ranging/radar sessions of a duration T_{ranging/radar}
- 310: VRU performs ranging and radar sessions to improve the detection and localization accuracy using light weight messages
- 312: VRU sends a warning message through its user interface or to cars, trucks, buses, and possibly informs where the danger is coming from
- 400: intelligent transport system (ITS) system architecture
- 402: application layer
- 404: facilities layer
- 406: network and transport layer
- 408: access layer
- 410: integration of VRU signaling and detection into ITS system architecture
- 500: communication flow
- 502: VRU
- 504: first RU
- 506: second RU
- 508: nth RU
- 510: pre-signaling phase
- 512: signaling phase
- 514: pre-signaling phase
- 516: signaling phase
- 518: ranging/radar phase
- 600: pre-discovery message
- 602: SYNC field
- 604: start of frame delimiter (SFD) field
- 606: physical layer header (PHR) field
- 608: physical layer service data unit (PSDU) field
- 700: discovery message
- 702: SYNC field
- 704: SFD field
- 706: PHR field
- 708: PSDU field
- 800: nearby message
- 802: SYNC field
- 804: SFD field
- 806: PHR field
- 808: PSDU field
- 900: communication flow of VRU
- 902: VRU trigger
- 904: channel free + LBT
- 906: send pre-discovery message
- 908: still discovery?
- 910: switch to ranging/radar mode
- 912: send discovery message
- 914: reception mode
- 916: nearby message received?
- 918: update "known users" list
- 1000: communication flow of road users
- 1002: pre-discovery message received
- 1004: reception mode
- 1006: discovery message received?
- 1008: still discovery phase?
- 1010: own ID already in "known users"
- 1012: wait for next phase
- 1014: randomly select a timeslot
- 1016: send nearby message
- 1100: device detection session
- 1102: VRU transmits
- 1104: VRU transmits
- 1106: RU(s) respond
- 1108: VRU <-> RU(s) ranging session
- 1110: session as perceived by other UWB devices
- 1200: communication session
- 1202: VRU transmits
- 1204: VRU radar session

## Claims

1. An ultra-wideband, UWB, communication device, comprising:
a transmitting unit configured to initiate a device detection session by transmitting a pre-discovery message and to transmit, during said device detection session, at least one discovery message in order to discover one or more external devices;
a receiving unit configured to receive, during said device detection session, one or more responses to the discovery message, wherein said responses have been transmitted by said external devices.

2. The UWB communication device of claim 1, wherein the pre-discovery message contains information indicative of a duration of the device detection session, in order to reserve a communication channel for subsequent UWB transmissions pertaining to the device detection session.

3. The UWB communication device of claim 2, wherein said information indicative of the duration of the device detection session is contained in a physical layer header, PHR, field of the pre-discovery message.

4. The UWB communication device of any preceding claim, wherein the pre-discovery message has a physical layer service data unit, PSDU, field having a predefined, fixed length.

5. The UWB communication device of any preceding claim, further comprising:
a selection unit configured to select, based on the responses received by the receiving unit, at least one of said external devices for carrying out one or more localization operations during said device detection session;
a localization unit configured to perform said localization operations using the transmitting unit and the receiving unit.

6. The UWB communication device of any preceding claim, further comprising a user interface configured to enable a user to activate the UWB communication device.

7. The UWB communication device of any preceding claim, wherein the transmitting unit is configured to transmit the pre-discovery message using a listen-before-talk, LBT, type of channel access mechanism.

8. The UWB communication device of any preceding claim, wherein the localization operations comprise UWB-based ranging operations and/or UWB-based radar operations.

9. The UWB communication device of any preceding claim, further comprising a warning unit configured to warn a user and/or to transmit a warning message to the external devices.

10. A road safety system comprising the UWB communication device of any preceding claim and said external devices.

11. A method of operating an ultra-wideband, UWB, communication device, comprising:
initiating, by a transmitting unit included in the UWB communication device, a device detection session by transmitting a pre-discovery message and transmitting, during said device detection session, at least one discovery message in order to discover one or more external devices;
receiving, by a receiving unit included in the UWB communication device, during said device detection session, one or more responses to the discovery message, wherein said responses have been transmitted by said external devices.

12. The method of claim 11, wherein the pre-discovery message contains information indicative of a duration of the device detection session, in order to reserve a communication channel for subsequent UWB transmissions pertaining to the device detection session.

13. The method of claim 12, wherein said information indicative of the duration of the device detection session is contained in a physical layer header, PHR, field of the pre-discovery message.

14. The method of any one of claims 11 to 13, wherein the pre-discovery message has a physical layer service data unit, PSDU, field having a fixed length.

15. The method of any one of claims 11 to 14, further comprising:
selecting, by a selection unit included in the UWB communication device, based on the responses received by the receiving unit, at least one of said external devices for carrying out one or more localization operations during said device detection session;
performing, by a localization unit included in the UWB communication device, said localization operations using the transmitting unit and the receiving unit.

## Amended claims

### Amended claims in accordance with Rule 137(2) EPC.

1. An ultra-wideband, UWB, communication device (100), comprising:
a transmitting unit (102) configured to initiate a device detection session by transmitting a pre-discovery message and to transmit, during said device detection session, at least one discovery message in order to discover one or more external devices;
a receiving unit (104) configured to receive, during said device detection session, one or more responses to the discovery message, wherein said responses have been transmitted by said external devices;
**characterized in that** the UWB communication device (100) is a portable device configured to be carried or worn by a road user or a device integrated into or attached to a vehicle used by the road user; and
wherein the pre-discovery message contains information indicative of a duration of the device detection session, in order to reserve a communication channel for subsequent UWB transmissions pertaining to the device detection session.

2. The UWB communication device (100) of claim 1, wherein said information indicative of the duration of the device detection session is contained in a physical layer header, PHR, field of the pre-discovery message.

3. The UWB communication device (100) of any preceding claim, wherein the pre-discovery message has a physical layer service data unit, PSDU, field having a predefined, fixed length.

4. The UWB communication device (100) of any preceding claim, further comprising:
a selection unit configured to select, based on the responses received by the receiving unit (104), at least one of said external devices for carrying out one or more localization operations during said device detection session;
a localization unit configured to perform said localization operations using the transmitting unit (102) and the receiving unit (104).

5. The UWB communication device (100) of any preceding claim, further comprising a user interface configured to enable a user to activate the UWB communication device (100).

6. The UWB communication device (100) of any preceding claim, wherein the transmitting unit (102) is configured to transmit the pre-discovery message using a listen-before-talk, LBT, type of channel access mechanism.

7. The UWB communication device (100) of any preceding claim, wherein the localization operations comprise UWB-based ranging operations and/or UWB-based radar operations.

8. The UWB communication device (100) of any preceding claim, further comprising a warning unit configured to warn a user and/or to transmit a warning message to the external devices.

9. A road safety system comprising the UWB communication device (100) of any preceding claim and said external devices.

10. A method (200) of operating an ultra-wideband, UWB, communication device, comprising:
initiating (202), by a transmitting unit included in the UWB communication device, a device detection session by transmitting a pre-discovery message and transmitting, during said device detection session, at least one discovery message in order to discover one or more external devices;
receiving (204), by a receiving unit included in the UWB communication device, during said device detection session, one or more responses to the discovery message, wherein said responses have been transmitted by said external devices;
**characterized in that** the UWB communication device is a portable device configured to be carried or worn by a road user or a device integrated into or attached to a vehicle used by the road user; and
wherein the pre-discovery message contains information indicative of a duration of the device detection session, in order to reserve a communication channel for subsequent UWB transmissions pertaining to the device detection session.

11. The method (200) of claim 10, wherein said information indicative of the duration of the device detection session is contained in a physical layer header, PHR, field of the pre-discovery message.

12. The method (200) of claim 10 or 11, wherein the pre-discovery message has a physical layer service data unit, PSDU, field having a fixed length.

13. The method (200) of any one of claims 10 to 12, further comprising:
selecting, by a selection unit included in the UWB communication device, based on the responses received by the receiving unit, at least one of said external devices for carrying out one or more localization operations during said device detection session;
performing, by a localization unit included in the UWB communication device, said localization operations using the transmitting unit and the receiving unit.
